# EUROPEAN PATENT SPECIFICATION

(11) **EP 3 692 785 B1**
(45) Date of publication and mention of the grant of the patent: **23.08.2023**
(21) Application number: 20155272.6
(22) Date of filing: 04.02.2020
(51) Int. Cl.: A01G 31/02

(54) **A MOVABLE CONTAINER FOR AN EBB-FLOW PLANT GROWTH SYSTEM**
BEWEGLICHER BEHÄLTER FÜR EIN EBBE-/FLUT-PFLANZENWACHSTUMSSYSTEM
RÉCIPIENT MOBILE POUR UN SYSTÈME DE CROISSANCE DE PLANTES À FLUX ET REFLUX

(30) Priority: 06.02.2019 NL 2022524; 22.02.2019 NL 2022624
(43) Date of publication of application: 12.08.2020
(73) Proprietor: Logiqs B.V., 2676 LV Maasdijk (NL)
(72) Inventor: VAN STAALDUINEN, Gerrit Johannes, 2676 LV Maasdijk (NL)
(74) Representative: Vernout, Robert

(56) References cited:
- US-A1- 2017 020 095
- US-B1- 6 233 870

## Description

The present invention relates to a container for an ebb-flow plant growth according to claim 1 and a method according to claim 11 for growing plants using such a container.

Containers for growing plants in ebb-flow conditions are widely used in greenhouses. The use of movable containers in greenhouses saves space that would otherwise be required for personel to access the containers and take care of the plants that are grown in the containers. Movable containers allow transport to a location in the greenhouse where personel perform their operations, e.g. sowing, transplanting, treating, cutting or harvesting plants, or cleaning the movable containers. The interior space comprises a support for supporting pots containing plants. Said support divides the interior space in an upper interior space and a lower interior space. The lower interior space allows draining of plant growth medium, which plant growth medium has been supplied during a flooding phase up to a level above the support (flooding). The lower interior space also allows supply of a gas (such as a gas enriched in CO₂), supplied via the gas duct into the lower interior space, said gas passing via the through holes in the support in order to provide the gas to the plants from underneath thereby improving growth conditions for each plant.

The problem of a such a container is that the gas inlet comprises means, like air stones, for keeping liquid out of the gas duct and gets dirty impairing its function and therefore requires cleaning.

It is an object of the present invention to provide a container according to the preamble in which the problem is reduced.

To this end, a container according to the invention is characterized in that the gas inlet extends along a length of a side wall for at least 25% of the length of said side wall.

In this way a container, when in use, allows for transport of gas from an external gas source, via the gas duct, into the lower interior space. The threshold portion prevents plant growth medium from entering a portion upstream of the threshold zone and the gas inlet is rendered less susceptible to fouling. Thus the gas duct according the invention alleviates the problem of the prior art and renders the container according the invention less sensitive to fouling and/or easier to clean.

The container according to the present invention may be a fixed container but is preferably a moveable container.

The plants placed on a support will typically be potted plants but may be plants that are rooted in a substrate block such as for example rock wool.

In a flooded state an aqueous liquid, such as a plant growth medium, is allowed to rise to a level higher than the support in order to allow the pots with plants to soak up liquid. The skilled person knows from container characteristics and contents therein what volume of liquid to supply in order not to let the level of the flooded phase rise higher than the lowest point of the threshold portion. Alternatively the skilled person can also use means for automatic regulation of supply of liquid which stops supply before the level of liquid reaches the lowest point of the threshold portion. The liquid will enter the gas duct upon flooding but the level does not rise to the level at which the threshold portion is located. As such this threshold portion defines the maximum level of liquid the container is allowed to contain and prevents liquid from entering a remaining gas duct portion upstream of the threshold portion. The container according the invention is much less sensitive to dirt compared to prior art movable containers that require gas stone diffusors to prevent liquid from entering the gas duct and subsequently an external gas source.

The gas inlet extends along the length of a side wall for at least 25% of the length of said side wall. In this way the gas inlet has a bigger opening and dirt will have less impact on the flow of gas into the lower interior space.

US6233870 discloses a method and device for aquatic greening in a space of a structure including a storage tank for a cultivating fluid, pump and pipes for circulating the cultivating fluid in a prescribed concentration and flow to a cultivating device. Air may be blown partially or thoroughly into the cultivating fluid.

According to a favourable embodiment, the gas duct forms a valveless fluid connection with the lower interior space.

In this way cleaning of the container is easier because valves, the closure and orifice together, have edges and/or nooks where dirt can accumulate and the dirt is more difficult to remove from these spots. It also renders the gas duct and the gas inlet more accessible for cleaning as well.

According to a favourable embodiment, the container comprises an overflow located at a level in between the support and the lowest point of the threshold portion.

In this way excess liquid added during a flooding phase may be discharged before the level of liquid by accident rises higher than the level of the lowest point of the threshold portion. This prevents any liquid from entering the gas duct upstream of the threshold portion and eventually the external gas source. A situation with an excess of aqueous liquid may arise due malfunction of the container, for example a clogged drain, or because of a malfunction in shutdown of liquid supply. The overflow may for example be present in the form of a lower side wall, an indent in the top edge of a side wall, a through hole in a side wall or an overflow pipe in fluid communication with a through hole in a side wall or a bottom wall.

According to a favourable embodiment, a wall section of the gas duct between the threshold portion and the gas inlet is at least partially removable.

In this way the inside of the gas duct downstream of the threshold portion can be inspected and is easier to clean. This portion downstream of the threshold portion is exposed to plant growth medium and contaminants such as microbes and dirt may accumulate there. Removing the wall section of the gas duct allows during cultivation or cleaning to access the inside of the gas duct to inspect and if neccessary to clean it.

According to a favourable embodiment, the gas inlet extends along said side wall for at least 50%, preferably at least 75%, and most preferably at least 90% of the length of said side wall.

In this way the gas inlet has a bigger opening and dirt will have less impact on the flow of gas into the lower interior space.

According to a favourable embodiment, the gas duct is configured to connect to an external gas source below the container.

In this way containers can be arranged closer to each other. The container according to the present invention may be a fixed container but is preferably a moveable container, if movable the gas duct (150) is configured to connect to an external gas source below the movable container (100). Movable containers can also be arranged closer to each other in the same way as a container that is not movable.

According to a favourable embodiment, the gas duct comprises a wall with a flowing curve for guiding flow of gas.

In this way the gas duct walls are easier to clean. The wall with the flowing curve also allows cheaper delivery of gas to the interior space by reducing the energy required for transport of gas to the container.

According to a favourable embodiment, a wall of the downstream end of the gas duct flowingly seals against the support.

In this way dead spaces near the gas inlet where pressure and flow of air is reduced so gas passes more easily through the through holes near the gas inlet in the support.

According to a favourable embodiment, the gas duct comprises a turning vane.

In this way a bend in the gas duct has a lower drag coefficient causing less pressure drop. A turning vane is a baffle for guiding the flow of gas in a bend, reducing pressure loss.

According to a favourable embodiment, the lower interior space comprises a guide configured for guiding a downward gas flow from the gas inlet to a gas flow parallel to the support.

In this way the interior space near the gas inlet is easier to clean. It also allows for cheaper delivery of gas to the interior space by reducing the energy required for transport of gas to the container.

Finally, the present invention relates to a method for growing plants by using a container for an ebb-flow plant growth system according to any of claims 1 - 10, wherein the method comprises:
- supporting pots containing plants on the support;
- filling the interior space with plant growth medium during a flooding phase to a level higher than the support;
- draining the plant growth medium from the interior space;,
wherein the method further comprises:
- supplying CO₂ enriched gas via the gas duct into the lower interior space, the CO₂ enriched gas passing via through holes in the support to provide the CO₂ enriched gas to the plants.

The invention will now be illustrated with reference to the example section below, and with reference to the drawing wherein
Fig. 1 is a perspective view of a container 100 according the invention;
Fig. 2 is a cross section over the length of the container 100 illustrated in figure 1;
Fig. 3 is a detail of the cross section illustrated in figure 2 showing the gas duct 150 and part of the interior space 130;
Fig. 4 is a detail of a cross section over the length of a container 100 of an embodiment wherein a water supply 460, a drain 124 and an overflow 461 are configured to discharge in a liquid discharge system 462;
Fig. 5 is a detail of a cross section over the length of a container 100 of an embodiment wherein the inner surface of the gas duct 150 wall flowingly connects to a support 140 for potted plants;
Fig. 6 is a detail of a cross section over the length of a container 100 of an embodiment wherein a gas duct 150 comprises a turning vane; and
Fig. 7 is a detail of a cross section over the length of a container 100 of an embodiment wherein the lower interior space 130" comprises a guide.

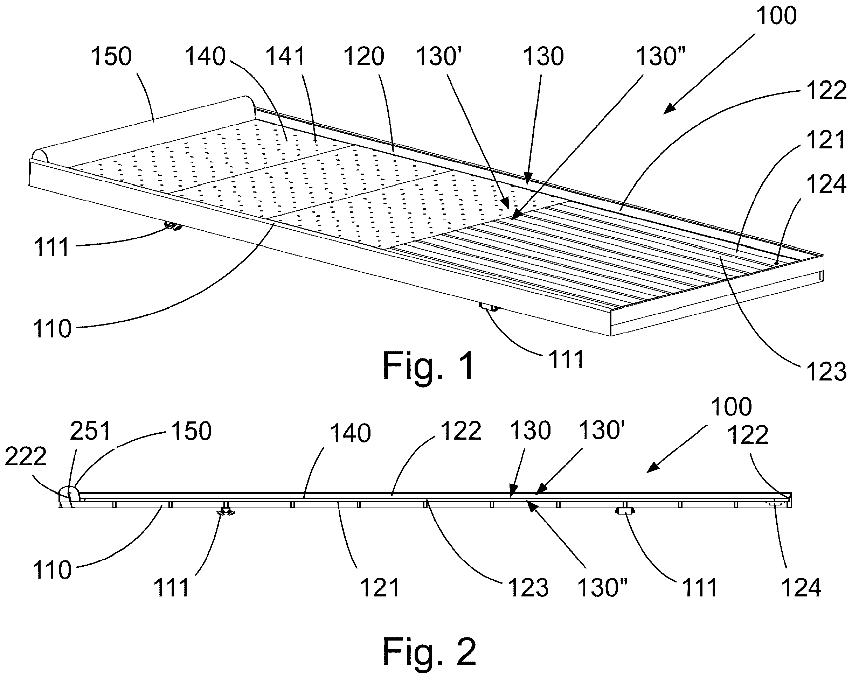

Figure 1 illustrates a perspective view of a movable container 100 according the invention. The container 100 according this embodiment comprises an aluminum frame 110, a container body 120, and wheels 111 for transporting the container 100 through the greenhouse over a rail system. An aluminum frame 110 provides rigidity and support for a container body 120, said container body 120 comprising a bottom wall 121 from which side walls 122 extend upwards defining an interior space 130. The bottom wall 121 comprises a plurality of profiles 123 for supporting a support 140 with an upper surface of the support 140 at a first distance from the bottom wall 121. The support 140 extends between opposite side walls 122, is supported by the profiles 123 positioned at a first distance from the bottom wall 121 and divides the interior space 130 in the lower and upper interior space. The support 140 is suitable for supporting potted plants, but also plants that are held in rock wool blocks or slabs, or any other material which allows roots of plants to find support, plant growth medium to be soaked up and air to pass through. In this perspective view a cut away view of the support 140 shows the lower interior space 130" in flanking the plurality of profiles 123. The support 140 further comprises through holes 141 so that fluid can pass from the upper interior space 130' to the lower interior space 130" or vice versa. The support 140 is positioned in such a way that fluids pass through the through holes 141. This is achieved by profiles 123 flanking the side walls 122 on top of which profiles 123 a sealing material is applied. This reduces the airflow through gaps between the edge of the support 140 and the sidewalls 122 of the container body 120.The support 140 can be removed to easily clean the lower interior space 130" if needed.

The container body 120 also comprises a drain 124, a through hole in the bottom wall 121 with a predetermined diameter that allows a predetermined amount of plant growth medium to drain in a certain time span; this amount being less than the amount of plant growth medium that is supplied to the interior space 130 in the same time span. In this way the fluid level within the container body 120 can be raised. By reducing the supply of plant growth medium the fluid level is maintained or lowered.

During a flooding phase plant growth medium is provided to the interior space 130 of the container 100. The through holes 141 allow passage of plant growth medium during the flooding phase and plant growth medium fills up the interior space 130 to a level higher than the first distance, in such a way plants supported on the support 140 are soaked and supplied with water and/or nutrients.

In the embodiment according to the present invention at a first side wall 222 (see figure 2) a gas duct 150 is extending along the length of the first side wall 222. The gas duct 150 comprises a downstream end defining a gas inlet debouching in the lower interior space 130", and upstream end. The gas duct 150 further comprises a threshold portion 251 (see figure 2) upstream of the downstream end of the gas duct 150, which threshold portion 251 comprises a lowest point located higher than the support 140. The gas duct 150 is connectable at the lower side of the container 100 to an external gas source, for example for providing air enriched with carbon dioxide. The gas duct 150 is configured to lead gas via a U-turn to the lower interior space 130" from which gas can pass through the through holes 141 and flow upwards to create an upward gas flow for providing better growth conditions for the plants at least during the ebb phase.

Figure 2 shows a cross section over the length of the container 100 illustrated in figure 1. The cross section passes through a profile 123 supporting the support 140. The gas duct 150 comprises a threshold portion 251 upstream of the downstream end of the gas duct 150. The threshold portion 251 comprises a lowest point that is located higher than the support 140, at a second distance from the bottom wall 121. Thus the interior space 130 can be filled up to a level lower than the threshold portion 251 at the second distance from the bottom without liquid entering the gas duct 150 upstream of the threshold portion 251. Gas can be provided from an external gas source (not shown) that connects to an upstream end of the gas duct 150, the gas duct inlet, located at the lower side of the container 100, that preferably automatically docks itself in the upstream end of the gas duct 150. In operation gas under pressure flows upwards from the gas duct inlet through the U-turn in the gas duct 150 comprising the threshold portion 251 and after passing the threshold portion 251 flows downwards towards the downstream end of the gas duct 150 via the gas inlet into the lower interior space 130". From the interior space 130 the gas can flow further through the through holes 141 (see figure 1) towards the plants present on top of the support 140 to provide them with better growth conditions.

Because the gas duct 150 according the invention has a threshold portion 251 embodied in the gas duct 150 it has no need for an air stone to prevent plant growth medium from entering the gas duct 150. A gas duct 150 according this embodiment stays cleaner because it lacks small cavities or nooks. The pressure drop caused by the gas duct 150 according the invention is also lower than the pressure drop caused by an air stone, and because of that the air duct allows operation at much lower pressures than containers according the prior art.

The container 100 is configured such that during flooding plant growth medium is allowed to rise to a level higher than the support 140, the upper side of which is at a first distance from the bottom wall 121, yet the level of plant growth medium is not allowed to rise as high that it can pass over a lowest point of the threshold portion 251 at a second distance from the bottom wall 121. In this way the threshold portion 251 blocks entry of liquids into the remainder of the gas duct 150 and eventually the external gas source.

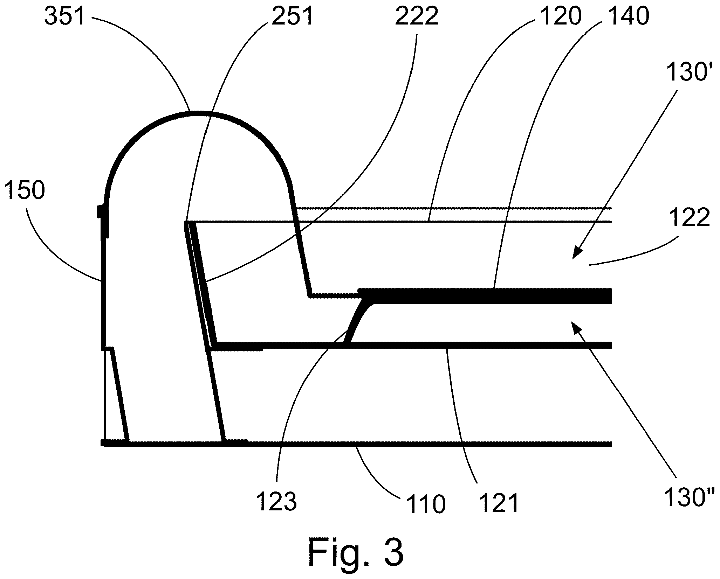

Figure 3 shows a detail of the cross section illustrated in figure 2 showing the gas duct 150 and part of the interior space 130 (see figure 1 and 2) with the gas inlet. One end of a removable gas duct wall section 351 is connected with a releasable tongue and groove connection to a fixed portion of the gas duct 150. The support 140 rests on top of the opposing end of the removable gas duct wall section 351. In this way the downward pressure of the support 140 and plants is sufficient to counter escape of gas from the gas duct 150 via any gap between the removable gas duct wall section 351 and the fixed portion of the gas duct 150 comprised in the aluminum frame 110 of the container 100. A gas-tight seal between the removable gas duct wall section 351 and the fixed portion of the gas duct 150 is conveniently established by applying resilient seals (not shown) where the removable gas duct wall section contacts the gas duct. A gas-tight seal helps to ensure that the gas, such as air enriched in CO₂, is effectively delivered to the plants via the through holes 141 (see figure 1).

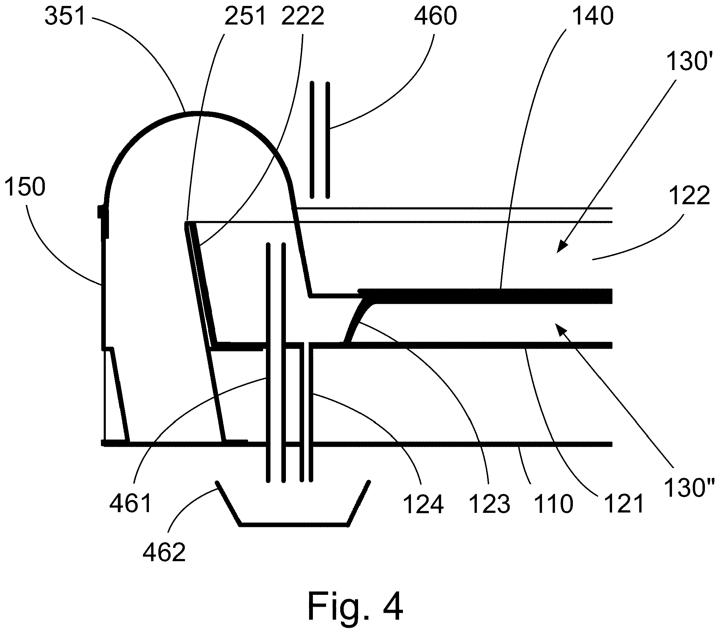

Figure 4 shows a detail of a cross section over the length of a container 100 of an embodiment wherein a water supply 460, a drain 124 and an overflow 461 are configured to discharge in a liquid discharge system 462. Plant growth medium is provided from a discharge tube from the liquid supply system. The liquid is discharged in the upper interior space 130' and fills up the interior space 130 including the lower interior space 130" up to a level lower than the lowest point of the threshold portion 251 at the second distance from the bottom wall 121 of the container 100. Liquid is discharged from the container 100 via a drain 124, a through hole with a predetermined diameter in the bottom wall 121. An overflow 461 with an upper open end an a lower open end is provided in the form of a tube extending through the bottom wall 121 upwards. The upper open end of the overflow 461 is positioned at a height in between the upper surface of the support 140 supporting the plants at the first distance from the bottom wall 121 and the lowest point of the threshold portion 251 at the second distance from the bottom wall 121. Excess fluid is allowed to discharge via the overflow 461 into a liquid discharge system 462 located under the container 100.

The discharge tube from the liquid supply system, the drain 124 of the container 100 and the overflow 461 are positioned above the liquid discharge system 462 that collects liquid and transports it away from the container 100 for further processing. This reduces spilling of liquid and keeps the environment of the container 100 clean and dry.

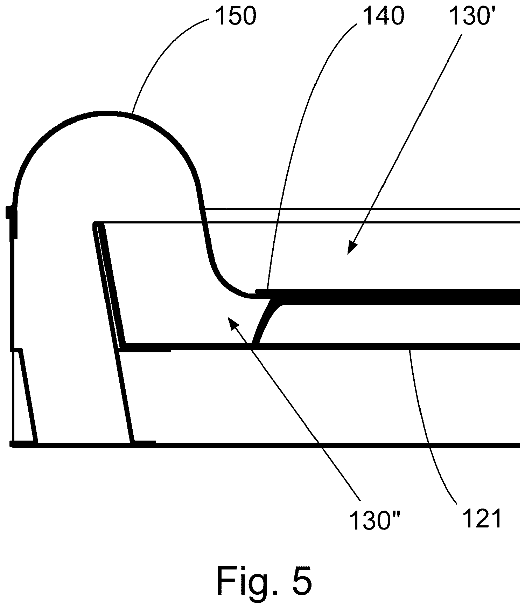

Figure 5 shows a detail of a cross section over the length of a container 100 of an embodiment wherein an inner surface of a wall of the gas duct 150 connects to the surface of the support 140 flowingly. Because the inner surface of the gas duct 150 wall connecting with the support 140 gradually changes incline the flow of gas upon entry in to the lower interior space 130" is less turbulent as it enters substantially parallel to the lower surface of the support 140. This reduces in operation dead space under the support 140 near the gas inlet in which pressure and flow of gas is reduced.

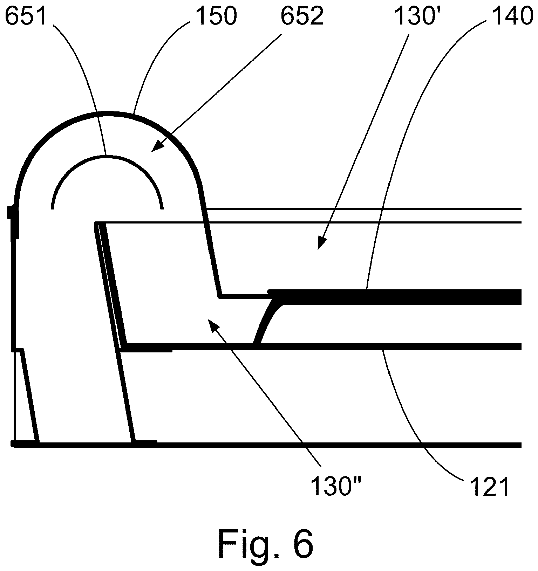

Figure 6 shows a detail of a cross section over the length of a container 100 of an embodiment wherein a gas duct 150 comprises a turning vane 651. The turning vane 651 is a baffle installed in the U-turn of the gas duct 150 and is configured to divide and guide the flow of gas through bend 652 in the gas duct 150. This reduces turbulence and thus pressure loss within the gas duct 150, helping to deliver the gas to the plants.

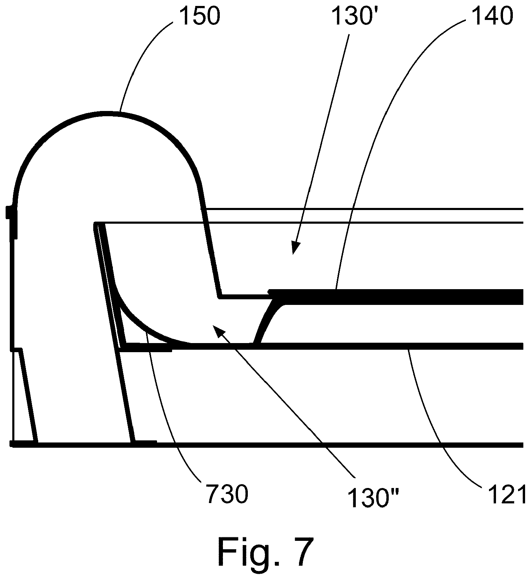

Figure 7 shows a detail of a cross section over the length of a container 100 of an embodiment herein the lower interior space 130" comprises a guide 730 configured for guiding a downward flow of gas from the U-turn in the gas duct 150 into a flow parallel to the support 140 into the lower interior space 130" reduces dead space under the gas inlet in the lower interior space 130". In operation dead space under the gas inlet results in air recirculation and/or turbulence causing a pressure drop of the gas flow. The guide 730 also reduces sharp corners reducing build up of contamination therein.

## Claims

1. A container (100) for an ebb-flow plant growth system, said container (100) comprising:
i) a bottom wall (121),
ii) sidewalls (122) extending from the container (100) bottom wall (121), wherein the sidewalls (122) and the bottom wall (121) define an interior space (130), wherein the interior space (130) is capable of being filled with an aqueous liquid,
iii) a support (140) for plants, said support (140) being removable, wherein the support (140) extends between opposite sidewalls (122), wherein the support (140) divides the interior space (130) in a lower interior space (130") and an upper interior space (130'), and wherein the support (140) further comprises through holes (141) to allow passage of fluid between the lower interior space (130") and the upper interior space (130'), and
iv) a gas duct (150) in fluid communication with the lower interior space (130"), said gas duct (150) comprising
- a downstream end defining a gas inlet debouching in the lower interior space (130"), and
- an upstream end;
wherein the gas duct (150) comprises a threshold portion (251) upstream of the downstream end of the gas duct (150), which threshold portion (251) comprises a lowest point located higher than the support (140); **characterized in that** the gas inlet extends along a length of a side wall (122) for at least 25% of the length of said side wall (122) .

2. The container (100) according to claim 1, wherein the gas duct (150) forms a valveless fluid connection with the lower interior space (130").

3. The container (100) according to claim 1 or 2, wherein the container (100) comprises an overflow (461) located at a level in between the support (140) and the lowest point of the threshold portion (251).

4. The container (100) according to any of the preceding claims, wherein a wall section (351) of the gas duct (150) between the threshold portion (251) and the gas inlet is at least partially removable.

5. The container (100) according to any of the preceding claims, wherein the gas inlet extends along said side wall (122) for at least 50%, preferably at least 75%, and most preferably at least 90% of the length of said side wall (122).

6. The container (100) according to any of the preceding claims, wherein the gas duct (150) is configured to connect to an external gas source below the container (100).

7. The container (100) according to any of the preceding claims, wherein the gas duct (150) comprises a wall with a flowing curve for guiding flow of gas.

8. The container (100) according to any of the preceding claims, wherein a wall of the downstream end of the gas duct (150) flowingly seals against the support (140).

9. The container (100) according to any of the preceding claims, wherein the gas duct (150) comprises a turning vane (651).

10. The container (100) according to any of the preceding claims, wherein the lower interior space (130") comprises a guide (730) configured for guiding a downward gas flow from the gas inlet to a gas flow parallel to the support (140).

11. A method for growing plants by using a container for an ebb-flow plant growth system according to any of claims 1 - 10, **characterized in that** the method comprises:
- supporting pots containing plants on the support (140);
- filling the interior space (130) with plant growth medium during a flooding phase to a level higher than the support;
- draining the plant growth medium from the interior space (130);
- supplying CO₂ enriched gas via the gas duct into the lower interior space, the CO₂ enriched gas passing via through holes in the support to provide the CO₂ enriched gas to the plants.

## Patentansprüche

1. Behälter (100) für ein Ebbe-Flut-Pflanzenwachstumssystem, wobei der Behälter (100) umfasst:
i) eine Bodenwand (121),
ii) Seitenwände (122), die sich von der Bodenwand (121) des Behälters (100) erstrecken, wobei die Seitenwände (122) und die Bodenwand (121) einen Innenraum (130) begrenzen, wobei der Innenraum (130) mit einer wässrigen Flüssigkeit gefüllt werden kann,
iii) einen Träger (140) für Pflanzen, wobei der Träger (140) entfernbar ist, wobei sich der Träger (140) zwischen gegenüberliegenden Seitenwänden (122) erstreckt, wobei der Träger (140) den Innenraum (130) in einen unteren Innenraum (130") und einen oberen Innenraum (130') unterteilt, und wobei der Träger (140) ferner Durchgangslöcher (141) umfasst, um den Durchgang von Fluid zwischen dem unteren Innenraum (130") und dem oberen Innenraum (130') zu ermöglichen, und
iv) einen Gaskanal (150) in Fluidverbindung mit dem unteren Innenraum (130"), wobei der Gaskanal (150) umfasst:
- ein stromabwärts gelegenes Ende, das eine Gaseinlassmündung in den unteren Innenraum (130") definiert, und
- ein stromaufwärts gelegenes Ende;
wobei der Gaskanal (150) einen Schwellenabschnitt (251) stromaufwärts des stromabwärts gelegenen Endes des Gaskanals (150) umfasst, wobei der Schwellenabschnitt (251) einen niedrigsten Punkt umfasst, der höher als der Träger (140) angeordnet ist; **dadurch gekennzeichnet, dass** sich der Gaseinlass entlang einer Länge einer Seitenwand (122) über mindestens 25 % der Länge der Seitenwand (122) erstreckt.

2. Behälter (100) gemäß Anspruch 1, wobei der Gaskanal (150) eine ventillose Fluidverbindung mit dem unteren Innenraum (130") bildet.

3. Behälter (100) gemäß Anspruch 1 oder 2, wobei der Behälter (100) einen Überlauf (461) umfasst, der sich auf einer Ebene zwischen dem Träger (140) und dem niedrigsten Punkt des Schwellenabschnitts (251) befindet.

4. Behälter (100) gemäß einem der vorhergehenden Ansprüche, wobei ein Wandabschnitt (351) des Gaskanals (150) zwischen dem Schwellenabschnitt (251) und dem Gaseinlass zumindest teilweise entfernbar ist.

5. Behälter (100) gemäß einem der vorhergehenden Ansprüche, wobei sich der Gaseinlass entlang der Seitenwand (122) über mindestens 50 %, vorzugsweise mindestens 75 % und am meisten bevorzugt mindestens 90 % der Länge der Seitenwand (122) erstreckt.

6. Behälter (100) gemäß einem der vorhergehenden Ansprüche, wobei der Gaskanal (150) so ausgelegt ist, dass er mit einer externen Gasquelle unterhalb des Behälters (100) verbunden ist.

7. Behälter (100) gemäß einem der vorhergehenden Ansprüche, wobei der Gaskanal (150) eine Wand mit einer Strömungskurve zur Führung des Gasstroms umfasst.

8. Behälter (100) gemäß einem der vorhergehenden Ansprüche, wobei eine Wand des stromabwärts gelegenen Endes des Gaskanals (150) gegen den Träger (140) abdichtet.

9. Behälter (100) gemäß einem der vorhergehenden Ansprüche, wobei der Gaskanal (150) einen Drehflügel (651) umfasst.

10. Behälter (100) gemäß einem der vorhergehenden Ansprüche, wobei der untere Innenraum (130") eine Führung (730) umfasst, die dazu ausgelegt ist, einen nach unten gerichteten Gasstrom vom Gaseinlass zu einem Gasstrom parallel zum Träger (140) zu leiten.

11. Verfahren zum Züchten von Pflanzen unter Verwendung eines Behälters für ein Ebbe-Flut-Pflanzenwachstumssystem gemäß einem der Ansprüche 1 - 10, **dadurch gekennzeichnet, dass** das Verfahren umfasst:
- Tragen von Töpfen mit Pflanzen auf dem Träger (140) ;
- Füllen des Innenraums (130) mit Pflanzenwachstumsmedium während einer Flutungsphase bis zu einer Ebene, die höher als der Träger ist;
- Ablassen des Pflanzenwachstumsmediums aus dem Innenraum (130);
- Zuführen von CO₂-angereichertem Gas über den Gaskanal in den unteren Innenraum, wobei das CO₂-angereicherte Gas durch Löcher in dem Träger strömt, um das CO₂-angereicherte Gas den Pflanzen zuzuführen.

## Revendications

1. Récipient (100) pour un système de croissance de plantes à flux et reflux, ledit récipient (100) comprenant :
i) une paroi inférieure (121),
ii) des parois latérales (122) s'étendant à partir de la paroi inférieure (121) du récipient (100), les parois latérales (122) et la paroi inférieure (121) définissant un espace intérieur (130), l'espace intérieur (130) pouvant être rempli d'un liquide aqueux,
iii) un support (140) pour des plantes, ledit support (140) étant amovible, le support (140) s'étendant entre les parois latérales opposées (122), le support (140) divisant l'espace intérieur (130) en un espace intérieur inférieur (130'') et un espace intérieur supérieur (130'), et le support (140) comprenant en outre des trous traversants (141) pour permettre le passage du fluide entre l'espace intérieur inférieur (130'') et l'espace intérieur supérieur (130'), et
iv) un conduit de gaz (150) en communication fluidique avec l'espace intérieur inférieur (130''), ledit conduit de gaz (150) comprenant
une extrémité aval définissant une entrée de gaz débouchant dans l'espace intérieur inférieur (130''), et
une extrémité amont ;
le conduit de gaz (150) comprenant une partie seuil (251) en amont de l'extrémité aval du conduit de gaz (150), laquelle partie seuil (251) comprend un point le plus bas situé plus haut que le support (140) ; **caractérisé en ce que** l'entrée de gaz s'étend le long d'une paroi latérale (122) sur au moins 25 % de la longueur de ladite paroi latérale (122).

2. Récipient (100) selon la revendication 1, le conduit de gaz (150) formant une connexion fluidique sans vanne avec l'espace intérieur inférieur (130").

3. Récipient (100) selon la revendication 1 ou 2, le récipient (100) comprenant un trop-plein (461) situé à un niveau entre le support (140) et le point le plus bas de la partie seuil (251).

4. Récipient (100) selon l'une quelconque des revendications précédentes, une section de paroi (351) du conduit de gaz (150) entre la partie seuil (251) et l'entrée de gaz étant au moins partiellement amovible.

5. Récipient (100) selon l'une quelconque des revendications précédentes, l'entrée de gaz s'étendant le long de ladite paroi latérale (122) sur au moins 50 %, de préférence au moins 75 %, et mieux encore au moins 90 % de la longueur de ladite paroi latérale (122).

6. Récipient (100) selon l'une quelconque des revendications précédentes, le conduit de gaz (150) étant conçu pour être raccordé à une source de gaz externe sous le récipient (100).

7. Récipient (100) selon l'une quelconque des revendications précédentes, le conduit de gaz (150) comprenant une paroi avec une courbe d'écoulement pour guider le flux de gaz.

8. Récipient (100) selon l'une quelconque des revendications précédentes, une paroi de l'extrémité aval du conduit de gaz (150) assurant l'étanchéité fluidique contre le support (140).

9. Récipient (100) selon l'une quelconque des revendications précédentes, le conduit de gaz (150) comprenant un déflecteur (651).

10. Récipient (100) selon l'une quelconque des revendications précédentes, l'espace intérieur inférieur (130'') comprenant un guide (730) conçu pour guider un flux de gaz descendant depuis l'entrée de gaz vers un flux de gaz parallèle au support (140).

11. Procédé de croissance de plantes à l'aide d'un récipient pour un système de croissance de plantes à flux et reflux selon l'une quelconque des revendications 1 à 10, **caractérisé en ce que** le procédé comprend les étapes consistant à :
supporter des pots contenant des plantes sur le support (140) ;
remplir l'espace intérieur (130) de milieu de croissance de plantes pendant une phase d'inondation jusqu'à un niveau supérieur à celui du support ;
vidanger le milieu de croissance de plantes de l'espace intérieur (130) ;
fournir du gaz enrichi en CO₂ par l'intermédiaire du conduit de gaz dans l'espace intérieur inférieur, le gaz enrichi en CO₂ passant par des trous traversants dans le support pour fournir le gaz enrichi en CO₂ aux plantes.
